# EUROPÄISCHE PATENTSCHRIFT

(11) **EP 0 506 930 B1**
(45) Veröffentlichungstag und Bekanntmachung des Hinweises auf die Patenterteilung: **08.06.1994**
(21) Anmeldenummer: 91919194.0
(22) Anmeldetag: 23.10.1991
(51) Int. Cl.: F16L 9/16, B29C 53/78

(54) **Verfahren zum Verbinden von Werkstückteilen aus Kunststoff**
Process for joining plastic component parts
Procédé pour raccorder des pièces d'ouvrage en plastique

(30) Priorität: 24.10.1990 CH 3401/90
(43) Veröffentlichungstag der Anmeldung: 07.10.1992
(73) Patentinhaber: ETR Tiefbautechnik Gesellschaft m.b.H., A-2355 Wiener Neudorf (AT); REDCO N.V., 1880 Kapelle op den Bos (BE); ETEX, F-75008 Paris (FR); ERSAG Systeme AG, CH-8706 Meilen (CH)
(72) Erfinder: KELDANY, Rachid, CH-8124 Maur (CH)
(74) Vertreter: Troesch Scheidegger Werner AG
(86) Internationale Anmeldenummer: CH9100219
(87) Internationale Veröffentlichungsnummer: WO9208072

(56) Entgegenhaltungen:
- EP-A- 0 307 613
- EP-A- 0 379 088
- DE-C- 3 744 455

## Beschreibung

Die vorliegende Erfindung betrifft ein Verfahren zum Verbinden von Werkstückteilen aus Kunststoff, entlang aneinanderstossender Kanten, welche Teile an der Verbindungsstelle mechanische Kupplungsmittel, wie z.B. Nut und Kamm, aufweisen.

Bei bisherigen Verfahren zum Verbinden von zwei benachbarten bzw. aneinanderstossenden Kanten von Werkstücken aus Kunststoff, wie z.B. Bändern, Platten etc., wird üblicherweise ein mechanischer Verschluss gewählt.

Bei anderen Verfahren (siche z.B. DE-C-37 44 455) werden die Kanten bzw. Ränder der Werkstücke ervärmt und durch das erwärmte eigene Material oder entsprechendes zusätzlich zugeführtes Material miteinander verschweisst. Dieses Verfahren kann zusätzlich bei mechanischen Verschlüssen angewandt werden.

Falls diese Techniken bei der Herstellung von Rohren im Wickelverfahren angewandt werden, werden an den miteinander zu verbindenden Kanten mechanische Kupplungsmittel in Form von Nut und Kamm vorgesehen. In diesem Fall kann zur Erhöhung der Dichtigkeit zwischen den miteinander zu verbindenden Werkstückkanten ("Verbindungsnaht") zusätzlich ein Dichtelement (z.B. Gummidichtung) eingesetzt werden (siche z.B. EP-A-0 307 613 und EP-A-0 379 088.

Trotz dieser Bemühungen sind die Verbindungen bei rein mechanischen Verschlüssen oder bei mit dem eigenen Kunststoffmaterial hergestellten Schweissstellen nicht mit Sicherheit vollständig dicht, es sei denn, es werde bezüglich Fertigungstoleranzen und Konstruktion ein sehr grosser Aufwand betrieben.

Aufgabe der vorliegenden Erfindung war die Schaffung eines einfachen Verfahrens zum Verbinden von Werkstückteilen aus Kunststoff, welches sowohl für thermoplastische wie auch duroplastische Materialen geeignet ist und eine vollständig dichte Verbindung gewährleistet.

Diese Aufgabe wird mit einem Verfahren gemäß Anspruch 1 gelöst.

Das dauerelastische Schweissmedium kann dabei bereits werkseitig oder erst vor Ort angebracht werden, und zwar vorzugsweise in Form eines durchgehenden, d.h. entlang der Verbindungsstelle ununterbrochenen Materialstranges.

Als dauerelastische, haftfähige Schweissmasse eignet sich eine Kautschukmasse, z.B. ein Copolymerisat aus Isobutylen und (wenig) Isopren ("Butyl").

Die Erfindung wird nachstehend noch etwas näher erläutert, wobei einige Ausführungsbeispiele von zur Durchführung des erfindungsgemässen Verfahrens ausgerüstete Kunststoffteile in der Zeichnung dargestellt sind.

Es zeigt:
Fig. 1 einen Schnitt durch eine Platte oder ein Kunststoffband, z.B. zur Herstellung eines Wickelrohres;
Fig. 2 einen Schnitt durch eine Verbindungsstelle zwischen zwei Rändern von Kunststoffteilen (z.B. Nahtstelle eines Wickelrohres); und
Fig. 3 einen Schnitt durch eine Kunststoffprofilvariante, deren Ränder beispielsweise zur Bildung eines Rohres (im Wickelverfahren) miteinander zu verbinden sind, wobei das Schweissmedium entweder am linken Rand in der Nut oder am rechten Rand auf dem Kamm angebracht werden kann.

Es sei nochmals wiederholt, dass es beim erfindungsgemässen Verfahren darum geht, zwei benachbarte, d.h. aneinanderstossende Kanten von Werkstücken (Bänder, Platten, etc.) aus Kunststoff (Thermoplaste, Duroplaste) einerseits mechanisch und andererseits gleichzeitig mittels einer dauerelastischen, am Kunststoff haftfähigen Masse, die als Schweissmedium dient, miteinander zu verbinden. Die dauerelastische Masse, beispielsweise eine Kautschukmasse, z.B. ein Copolymerisat aus Isobutylen und (wenig) Isopren (bekannt z.B. unter dem Markennamen "Butyl") wird entweder fabrikseitig oder vor Ort am Werkstück angebracht. Im ersten Fall kann der Schweissmediumstrang gleichzeitig mit der Herstellung des Kunststoffprofils aufgebracht werden.

Zur zusätzlichen mechanischen Verbindung sind die miteinander zu verbindenden Kanten des Werkstückes als Nut bzw. Kamm ausgebildet. Die Kamm- und Nut-Kombination erlaubt nur die mechanische Fixierung der Teile aneinander. Das in jedem Fall vorgängig angebrachte Schweissmedium wird vor dem Zusammenfügen erwärmt. Damit wird die Fliess- und Haftfähigkeit dieser Kautschukmasse erhöht. Nach der Erkaltung der dadurch verschweissten Teile bleibt die Schweissstelle auch bei niedriger Temperatur elastisch.

Vorteile von erfindungsgemäss hergestellten Verbindungen:
- Durch die Haftung und Verschweissung der Masse entsteht eine vollständige dichte Verbindung.
- Die Verbindung ist resistent gegen Wurzeleinwüchse.
- Es wird eine kraftschlüssige Verbindung im Rahmen der Elastizitätsgrenze des Schweissmediums gebildet.
- Die Eigenschaften des Schweissmediums sind einstellbar.
- Das Schweissmedium ist mit verschiedenen thermoplastischen und duroplastischen Materialen verwendbar.
- Nach dem erfindungsgemässen Verfahren hergestellte Rohre behalten ihre axiale Flexibilität im Gegensatz zu hart verschweissten oder verklebten Rohren; das gleiche gilt für Auskleidungsplatten.
- Das erfindungsgemässe Verfahren gewährleistet eine uniforme Dichtung und Verbindung, auch bei ungünstigen Umgebungsbedingungen.

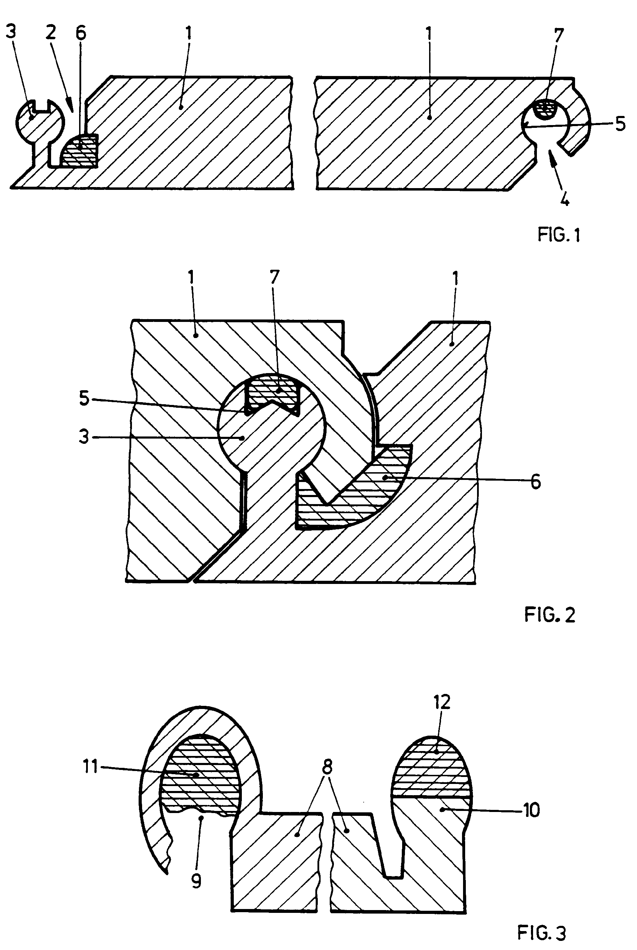

Fig. 1 zeigt einen Schnitt durch ein Kunststoffband 1, mit welchem Rohre im Wickelverfahren hergestellt werden; dabei wird der auf der einen Bandkante 2 vorgesehene Kamm 3 an der anderen Bandkante 4 in eine entsprechend ausgebildete Nut 5 einschnappen.

Damit ausser dem rein mechanischen Zusammenhalt auch eine Dichtheit der Schweissstelle (beim Rohr eine wendelformige Verbindungsnaht) gewährleistet ist, wird an den gezeigten Stellen jeweils ein durchgehender Strang 6 bzw. 7 aus einer dauerelastischen, am Profilmaterial haftfähigen Masse (Kautschuk, z.B. "Butyl") angebracht. Das Anbringen erfolgt werkseitig oder vor Ort, vor dem Zusammenfügen.

Fig. 2 zeigt in vergrössertem Massstab eine dichte Verbindungsstelle im Schnitt. Das Schweissmedium 6 bzw. 7 haftet an den Kontaktflächen mit den Werkstückteilen 1 und bildet so eine elastische, völlig dichte Verbindung (zusätzlich zur mechanischen Fixierung durch Nut 5 und Kamm 3).

Fig. 3 zeigt noch eine Variante eines Kunststoffprofils 18 mit Nut 9 und Kamm 10 an entgegengesetzten Kanten. Das zur elastischen Verbindung vorgesehene Schweissmedium 11 bzw. 12 wird entweder in der Nut 9 oder auf dem Kamm 10 (gegebenenfalls auch an beiden Teilen) vorgängig dem Verbinden angebracht.

## Patentansprüche

1. Verfahren zum Verbinden von Werkstückteilen aus Kunststoff entlang aneinanderstossender Kanten, welche Teile an der Verbindungsstelle mechanische Kupplungsmittel, wie z.B. Nut und Kamm, aufweisen, bei dem entlang mindestens einer der miteinander zu verbindenden Kanten im Bereich der mechanischen Kupplungsmittel eine dauerelastische, am Kunststoff haftfahige Masse als Schweissmedium angebracht wird und die miteinander zu verbindenden Werkstückteile zusammengefügt werden, wobei vor dem Zusammenfügen das Schweissmedium erwärmt wird.

2. Verfahren nach Anspruch 1, dadurch gekennzeichnet, dass das Schweissmedium fabrikseitig, z.B. gleichzeitig mit der Herstellung des Kunststoffteils, oder vor Ort am Werkstück angebracht wird.

3. Verfahren nach Anspruch 1 oder 2, dadurch gekennzeichnet, dass als dauerelastische, haftfähige Masse eine Kautschukmasse, z.B. ein Copolymerisat aus Isobutylen und Isopren, verwendet wird.

4. Verfahren nach einem der Ansprüche 1 bis 3, dadurch gekennzeichnet, dass das Schweissmedium in Form eines durchgehenden bzw. ununterbrochenen Stranges angebracht wird.

5. Aus miteinander verbundenen Werkstückteilen aus Kunststoff gebildetes Konstruktionselement, insbesondere aus Kunststoffbändern gewickeltes Rohr, hergestellt nach dem Verfahren nach einem der Ansprüche 1 bis 4.

## Claims

1. A process for connecting plastics work piece parts along mutually abutted edges, which parts have mechanical coupling means, such as e.g. a groove and a tongue, at the location of the connection, wherein along at least one of the edges to be connected together a permanently elastic mass capable of sticking to the plastics is applied as a welding medium in the region of the mechanical coupling means and the workpiece parts to be connected together are joined together, wherein prior to the joining together the welding medium is heated.

2. A process according to claim 1, characterised in that the weld medium is applied at the factory, e.g. simultaneously with the production of the plastics part, or *in* *situ* at the work piece.

3. A process according to claim 1 or 2, characterised in that a rubber mass, e.g. a copolymer of isobutylene and isoprene is used as the permanently elastic adherent mass.

4. A process according to any of claims 1 to 3 characterised in that the weld medium is applied in the form of a through-going or uninterrupted strip.

5. A constructional element formed from plastics workpiece parts connected together, particularly a pipe wound from plastics bands, manufactured according to the process according to any one of claims 1 to 4.

## Revendications

1. Procédé de raccordement de pièces d'ouvrage en matière synthétique le long de bords jointifs, ces pièces présentant à l'emplacement de raccordement des moyens de couplage mécanique, comme par exemple une nervure et une rainure, dans lequel, le long d'au moins un des bords à relier mutuellement, une masse capable d'adhérer sur la matière synthétique et élastique de manière durable est appliquée comme milieu de soudure dans la zone des moyens de couplage mécaniques, les pièces d'ouvrage à raccorder mutuellement étant assemblées, le milieu de soudure étant chauffé avant l'assemblage.

2. Procédé suivant la revendication 1, caractérisé en ce que le milieu de soudure est appliqué sur la pièce d'ouvrage en atelier, par exemple simultanément à la fabrication de la pièce en matière synthétique, ou in situ.

3. Procédé suivant l'une des revendications 1 et 2, caractérisé en ce que, comme masse adhésive, élastique de manière durable, on utilise une masse de caoutchouc, par exemple un copolymère d'isobutylène et d'isoprène.

4. Procédé suivant l'une des revendications 1 à 3, caractérisé en ce que le milieu de soudure est appliqué sous la forme d'un cordon continu et respectivement ininterrompu.

5. Elément de construction formé de pièces d'ouvrage en matière synthétique mutuellement raccordées, en particulier tube enroulé à partir de bandes de matière synthétique, fabriqué selon le procédé suivant l'une des revendications 1 à 4.
